# EUROPEAN PATENT APPLICATION

(11) **EP 4 542 920 A1**
(43) Date of publication of application: **23.04.2025**
(21) Application number: 23204451.1
(22) Date of filing: 18.10.2023
(51) Int. Cl.: H04L 9/08, H04L 9/40, H04W 4/80

(54) **FIELD DEVICE SYSTEM AND METHOD OF ESTABLISHING COMMUNICATION WITH A FIELD DEVICE SYSTEM**

(71) Applicant: Rosemount Tank Radar AB, 435 23 Mölnlycke (SE)
(72) Inventor: LINDH, Johan, 583 28 LINKÖPING (SE); FRÖVIK, Christer, 582 29 LINKÖPING (SE); GEFVERT, Anton, 582 30 LINKÖPING (SE)
(74) Representative: Kransell & Wennborg KB

(57) **Abstract**

Method of transferring a certificate to a field device (104), the method comprising, by a mobile device (102) comprising first processing circuitry (204) and first NFC-circuitry (206): acquiring (300) a certificate and storing the certificate on the mobile device; establishing (302) NFC communication between the mobile device and a field device (104) comprising second processing circuitry (208) and second NFC-circuitry (210); transferring (304) the certificate to the field device; storing (306) the certificate on the field device; and closing (308) the NFC communication between the mobile device and the field device.

## Description

### Field of the Invention

The present invention relates to a field device system and to a method for establishing communication with a field device system. In particular, the present invention is aimed at transferring a certificate to the field device system enabling secure communication with a field device.

### Background of the Invention

Field devices are often used in industry to measure various process variables, such as pressure, temperature, flow or product level. In particular, a radar level gauge system is an example of a field device which may be used for measuring the level of a product such as a process fluid, a granular compound or another material.

Radar level gauge (RLG) systems are for example in wide use for determining the filling level of a product contained in a tank. Radar level gauging is generally performed either by means of non-contact measurement, whereby electromagnetic signals are radiated towards the product contained in the tank, or by means of contact measurement, often referred to as guided wave radar (GWR), whereby electromagnetic signals are guided towards and into the product by a probe acting as a waveguide. The probe is generally arranged to extend vertically from the top towards the bottom of the tank.

Field devices in general and radar level gauge systems in particular are many times used in hazardous environments and in areas specifically classified as hazardous areas according to existing industry standards. In such applications, installation replacement and maintenance of the system can be both complicated and dangerous.

Accordingly, there is a need to facilitate simple installation, service and maintenance of radar level gauge systems.

### Summary

In view of above-mentioned problems, it is an object of the present invention to provide a simple and easy to use field device system and a method of transferring a certificate to a field device of the field device system.

According to a first aspect of the invention, there is provided a method of transferring a certificate to a field device, the method comprising, by a mobile device comprising first processing circuitry and first NFC-circuitry: acquiring a certificate and storing the certificate on the mobile device; establishing NFC communication between the mobile device and a field device comprising second processing circuitry and second NFC-circuitry; transferring the certificate to the field device; storing the certificate on the field device; and closing NFC communication between the mobile device and the field device.

A field device should be understood to include any device that determines a process variable and communicates a measurement signal indicative of that process variable to a remote location. Examples of field devices include devices for determining process variables such as filling level, temperature, pressure, fluid flow etc.

For a field device configured to communicate securely with a remote device using HTTPS, TLS is used to encrypt the data being transferred. The field device manages the TLS encryption using PKI (Public Key Infrastructure) involving a certificate comprising a public and a private TLS key which is used to identify the field device and to verify that the device is who it claims to be via a Chain of Trust, linking to a trusted Certificate Authority as well as containing the secret key used to establish a TLS connection.

The present invention is based on the realization that it is advantageous to generate the certificate using a device other than the field device. Moreover, the transfer of a certificate is typically performed during commissioning of a field device. Since generating the certificate, and in particular the keys of the certificate, is resource intensive, it may take a long time to generate the certificate on a field device having limited computational resources. Accordingly, by generating the certificate elsewhere, on a device having a higher computational capacity, the commissioning time can in many cases be significantly reduced compared to if the certificate needs to be generated on the field device. An operator handling commissioning of the field device is thereby required to spend less time by the field device, making commissioning both more efficient and safer. Moreover, by removing the requirement of having to generate the certificate on the field device, processing circuity of the field device can also be optimized to perform other tasks which often require considerably less resources.

Even though the method is described primarily with respect to commissioning of a field device system, the described method of transferring a certificate may also be used in other situations where a certificate needs to be transferred to a field device.

Using the TLS (Transport Layer Security) protocol enables secure communication, but until a certificate is available on the field device another communication method must be used between the field device and an external device, which typically involves an unsecure communication channel. A further advantage of the present invention is thus that by utilizing NFC-communication between the field device and the mobile device, a further element of security is added since the mobile device must be physically close to the field device to enable communication, thereby reducing the risk of unauthorized access to the field device. In particular, using NFC-communication for transferring the certificate protects against an attacker listening in on the communication such as in a man-in-the-middle attack.

According to an example embodiment, storing the certificate on the field device comprises storing the certificate on a non-volatile memory of the field device. The certificate thereby remains stored on the field device even if power to the field device is lost or if the field device is only powered up intermittently.

According to an example embodiment, acquiring the certificate comprises receiving the certificate from a remote server. A remote server may here encompass any computational resource remote from the field device and the mobile device. The remote server may for example be a stationary computer accessible by the mobile device via a local network, or it may be a cloud resource accessible via internet. The remote server can be assumed to have the computational resources required to quickly generate the required certificates.

According to an example embodiment, acquiring the certificate comprises generating the certificate by the mobile device using an intermediate certificate received from a remote server. A mobile device such as a smartphone or a tablet computer may be significantly more powerful than a field device and thereby capable of quickly generating a certificate. The intermediate certificate needed to generate the certificate can then be received from a remote server which may be any remote device as described above.

According to an example embodiment, the method further comprises removing the certificate from the mobile device after transferring the certificate. It can thereby be ensured that the certificate is not used by other devices and that the certificate cannot be accessed after commissioning of the field device.

According to an example embodiment, the certificate is an X.509 certificate. By using an X.509 certificate comprising a public key and a private key, the field device is capable of communicating using protocols such as TLS/SSL thereby enabling secure communication via HTTPS.

According to an example embodiment, the method further comprises providing power to the second NFC-circuitry from first the first NFC-circuitry. Using NFC-communication can thereby provide the additional advantage of enabling transfer of the certificate to the field device without having to provide power to the field device as such since the power required for communication is provided by the mobile device.

According to an example embodiment, the method further comprises, by the mobile device, providing a password to the field device enabling transfer of a certificate using NFC-communication between the mobile device and the field device. To further improve safety by preventing unauthorized access to the field device, a password may be required to allow transfer of the certificate using NFC-communication between the field device and the mobile device. The password may for example be a password specific to and uniquely identifying the field device.

There is also provided a computer program product comprising program code for performing, when executed by a processor device, the method of any of the aforementioned embodiments, a control system comprising one or more control units configured to perform the method and a non-transitory computer-readable storage medium comprising instructions, which when executed by the processor device, cause the processor device to perform the method of any of the aforementioned embodiments.

According to a second aspect of the invention, there is further provided a field device commissioning system comprising: a mobile device comprising first processing circuitry and first NFC-circuitry and a field device comprising second processing circuitry and second NFC-circuitry; wherein the mobile device is configured to acquire a certificate store the certificate on the mobile device; establish NFC communication between the mobile device and the field device; and transfer the certificate to the field device; and wherein the field device is configured to store the certificate on the field device.

According to an example embodiment, the mobile device is further configured to close NFC communication between the mobile device and the field device upon completion of transfer of the certificate. The transfer of the certificate is thereby completed, and the field device can communicate securely using the certificate.

Effects and features of the second aspect of the invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates an exemplary field device system in the form of a radar level gauge system;
Fig. 2 is a schematic block diagram of a commissioning system for a field device according to an example embodiment;
Fig. 3 is a flow chart outlining steps of a method according to an example embodiment;
Fig. 4 is a data flow diagram illustrating a method of commissioning a field device according to an example embodiment; and
Fig. 5 is a data flow diagram illustrating a method of commissioning a field device according to an example embodiment.

### Detailed Description of Example Embodiments

In the present detailed description, various embodiments of the system and method according to the present invention are mainly described with reference to a field device in the form of a radar level gauge installed in a tank. However, the described system and method is suitable for any type of field device comprising a housing, a sensor module and an electronics module. Moreover, the method ad system is described with reference to commissioning of a field device system even though the method may be applied also in other situations requiring the transfer of a certificate.

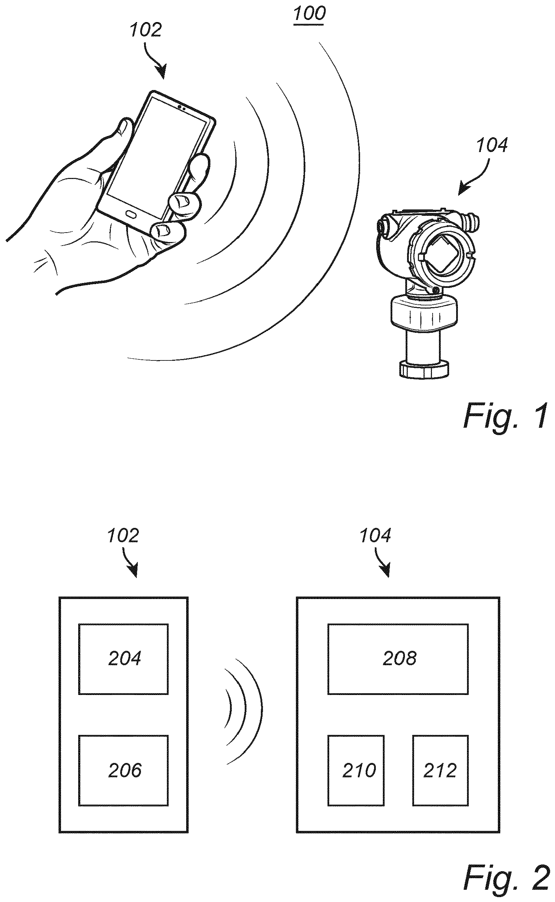

Fig. 1 schematically illustrates an example embodiment of a field device system 100 and Fig. 2 is a block diagram schematically illustrating components of the field device system 100 according to an example embodiment. The field device system 100 comprises a mobile device 102 having first processing circuitry 204 and first NFC-circuitry 206 and a field device 104 having second processing circuitry 208 and second NFC-circuitry 210. The illustrated field device 104 further comprises a non-volatile memory 212 configured to store a certificate. The described field device system 100 may also be referred to as a field device commissioning system 100.

The illustrated field 104 device is a radar level gauge system suitable for arrangement on a tank for determining a level of material in the tank. A radar level gauge system typically comprises a housing, a sensor module comprising a sensor, and an electronics module arranged in the housing and comprising sensing circuitry configured to communicate with the sensor module to receive the sensing signal from the sensor module. However, various embodiments of the present invention are applicable for a wide range of field devices comprising sensors and sensor modules such as pressure sensors, flow sensors, temperatures sensors, viscosity sensors or the like. In general, field devices can be seen to encompass any remotely controlled device used in process control and automation.

The first and second processing circuitry 204, 208 of the mobile device 102 and of the field device 104 may include a microprocessor, microcontroller, programmable digital signal processor or another programmable device. The processing circuitry may also, or instead, include an application specific integrated circuit, a programmable gate array or programmable array logic, a programmable logic device, or a digital signal processor. Where the processing circuitry includes a programmable device such as the microprocessor, microcontroller or programmable digital signal processor mentioned above, the processor may further include computer executable code that controls operation of the programmable device.

The first and second NFC-circuitry 206, 210 208 of the mobile device 102 and of the field device 104 respectively can be considered to include a Near-Field Communication chip (NFC chip or NFC chipset) which is a siliconbased component or Integrated Circuit (IC) that can be used in different ways, depending on the targeted application. The first and second NFC-circuitry 206, 210 also include or is connected to an appropriate antenna, enabling short-range, wireless communication between the two devices 102, 104. This provides an additional layer of security, as only devices within close proximity of each other can communicate via NFC.

At least the first NFC-circuitry 206 arranged in the mobile device 102 can be described as an "NFC reader chip" and can be considered to be the main controller of the NFC-based communication system since it is capable of initiating communication, reading and writing information, and providing power to the second NFC-circuitry 210. The first NFC-circuitry 206 can in some examples be referred to as an NFC controller chip having increased features such as a secure element enabling secure transactions.

In some examples, also the second NFC-circuitry 210 is capable of reading and writing information to a remote NFC-circuit. The second NFC-circuitry 210 may also be a passive NFC-circuit, sometimes referred to as an NFC-tag, capable of responding to received instructions. The NFC-tag may also be referred to as a dynamic NFC-tag or dual-interface tag.

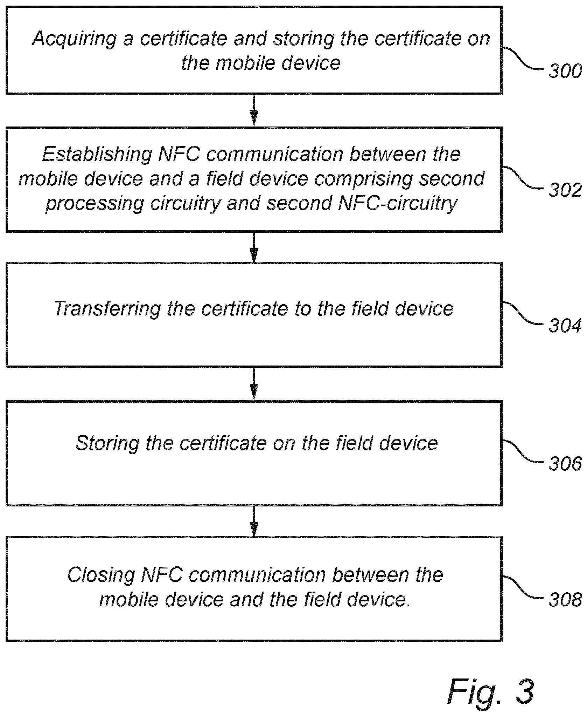

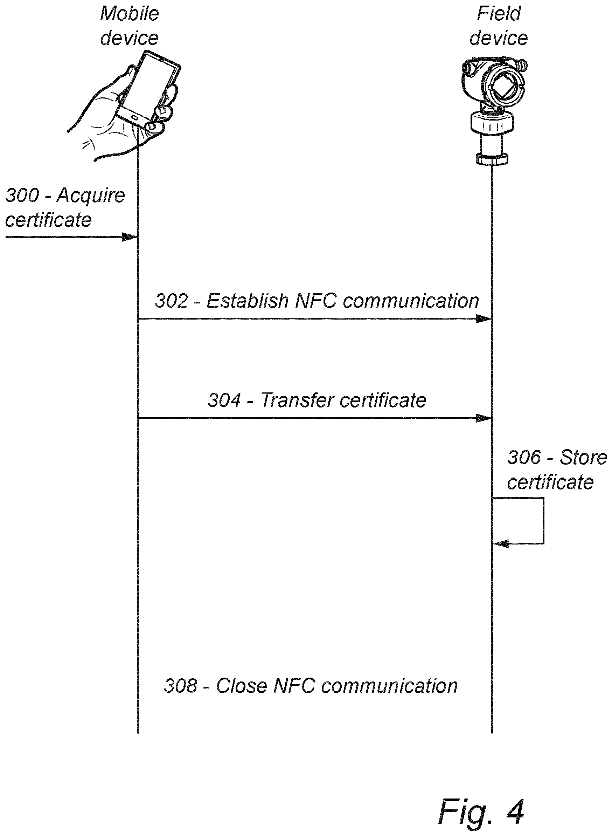

Fig. 3 is a flow chart outlining a method of commissioning a field device 104 according to an example embodiment and Fig. 4 is a corresponding data flow diagram illustrating data flow for the method. The method will be described with further reference to the block diagram of Fig. 2.

The method comprises acquiring 300 a certificate comprising a public key and a private key and storing the certificate on the mobile device 102. The next step comprises establishing 302 NFC communication between the mobile device 102 and the field device 104 comprising second processing circuitry 208 and second NFC-circuitry 210. Once the communication is established, the certificate is transferred 304 to the field device 104 and stored 306 on the field device 103. When the certificate has been transferred to the mobile device 102, NFC communication between the mobile device 102 and the field device 104 is closed 308. It should be noted that the described steps are not strictly required to be performed in the order in which they are described. For example, the certificate may be stored in a specific location in the field device 104 after closing of the NFC communication, such as in the non-volatile memory 212 of the field device.

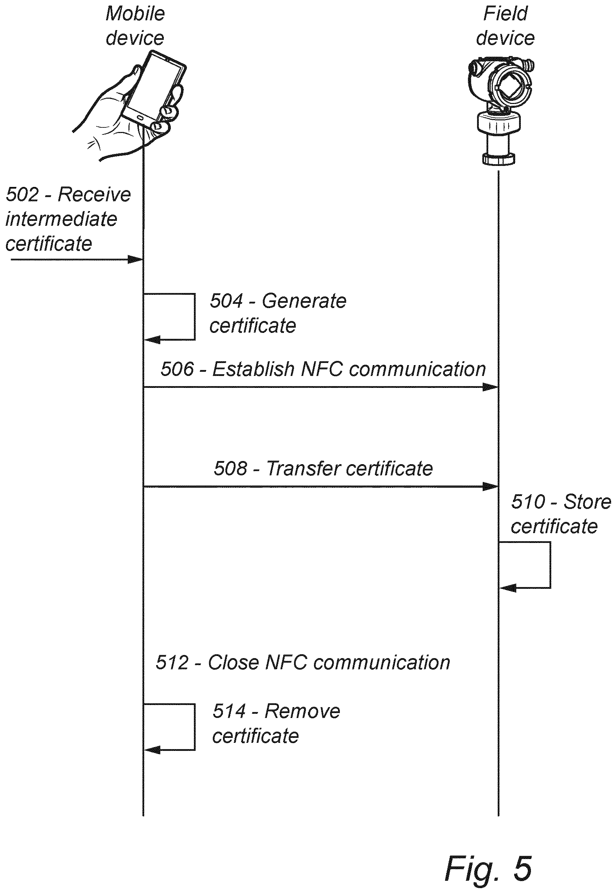

Fig. 5 is a data flow diagram showing an example implementation of a method of transferring a certificate to a field device 104. The certificate may for example be an X.509 certificate standard for SSL/TLS client authentication. To generate the described certificate, an intermediate certificate is needed. In the described example, an intermediate certificate is received 502 by the mobile device 102, for example from a web service or by direct download from a local server. Certification generation could also be provided as a cloud-based service by the provider of the field device 104 in which case the certificate is transferred to the mobile device 102 without any generation taking place on the mobile device 102.

In some applications, the first processing circuitry 204 of the mobile device 102 is more powerful than the second processing circuitry 208 of the field device 104. This means that computationally complex or demanding operations are advantageously performed by the mobile device 102 instead of by the field device 104. After receiving the intermediate certificate, the mobile device 102 can generate 504 the certificate comprising a public key and a private key. When the certificate has been generated NFC communication between the mobile device 102 and the field device 104 is established 506 and the certificate is transferred 508 to the field device 104 where it is stored 510 on a non-volatile memory 212.

Establishing NFC-communication may also require that a password is provided to the field device 104 to enable transfer of a certificate using NFC-communication between the mobile device 102 and the field device 104, where the password preferably is a password specific to and uniquely identifying the field device 104. The field device could thereby be configured to only allow transfer of a certificate if the correct password is provided. The use of a password strengthens security by reducing the risk of unauthorized access to the field device.

When the certificate has been transferred to the field device 104 the NFC-communication can be closed 512 by the mobile device 102 and the certificate is subsequently removed 514 from the mobile device 102.

The described method of transferring a certificate to a field device can for example be performed during commissioning of the device to enable TLS encryption on the main communication channel (HTTPS/TLS).

However, even though the described method of transferring a certificate is mainly described with refence to commissioning of a field device, it would also be possible to use the method in other situations when a certificate need to be transferred to a field device, such as if the validity date of the certificate has expired or if an IP-address or DNS for reaching the field device has changed, in which case a new certificate is needed.

Even though the invention has been described with reference to specific exemplifying embodiments thereof, many different alterations, modifications and the like will become apparent for those skilled in the art. Also, it should be noted that parts of the system and method may be omitted, interchanged or arranged in various ways, the system and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method of transferring a certificate to a field device (104), the method comprising, by a mobile device (102) comprising first processing circuitry (204) and first NFC-circuitry (206):
acquiring (300) a certificate and storing the certificate on the mobile device;
establishing (302) NFC communication between the mobile device and a field device (104) comprising second processing circuitry (208) and second NFC-circuitry (210);
transferring (304) the certificate to the field device;
storing (306) the certificate on the field device; and
closing (308) the NFC communication between the mobile device and the field device.

2. The method according to claim 1, wherein storing the certificate on the field device comprises storing the certificate on a non-volatile memory (212) of the field device

3. The method according to claim 1 or 2, wherein acquiring the certificate comprises receiving the certificate from a remote server.

4. The method according to claim 1, wherein acquiring the certificate comprises generating the certificate by the mobile device using an intermediate certificate received from a remote server.

5. The method according to any one of the preceding claims, further comprising removing the certificate from the mobile device after transferring the certificate.

6. The method according to any one of the preceding claims, wherein the certificate is an X.509 certificate.

7. The method according to any one of the preceding claims, further comprising providing power to the second NFC-circuitry from first the first NFC-circuitry.

8. The method according to any one of the preceding claims, further comprising, by the mobile device, providing a password to the field device enabling transfer of a certificate using NFC-communication between the mobile device and the field device.

9. The method according to claim 8, wherein the password is a password specific to and uniquely identifying the field device.

10. A computer program product comprising program code for performing, when executed by a processor device, the method of any of claims 1 to 9.

11. A non-transitory computer-readable storage medium comprising instructions, which when executed by a processor device, cause the processor device to perform the method of any of claims 1 to 9.

12. Afield device system (100) comprising: a mobile device (102) comprising first processing circuitry (204) and first NFC-circuitry (206) and a field device (104) comprising second processing circuitry (208) and second NFC-circuitry (210);
the mobile device being configured to acquire a certificate and store the certificate on the mobile device; establish NFC communication between the mobile device and the field device; and transfer the certificate to the field device; and
the field device being configured to store the certificate on the field device.

13. The field device system according to claim 12, wherein the mobile device is further configured to close NFC communication between the mobile device and the field device upon completion of transfer of the certificate.

14. The field device system according to claim 12, wherein the field device comprises a non-volatile memory configured to store the certificate.

15. The field device system according to any one of claims 12 to 14, wherein the mobile device is configured to acquire an intermediate certificate from a remote server and to generate the certificate using the intermediate certificate.
